# EUROPÄISCHE PATENTSCHRIFT

(11) **EP 2 318 780 B1**
(45) Veröffentlichungstag und Bekanntmachung des Hinweises auf die Patenterteilung: **14.11.2012**
(21) Anmeldenummer: 09778280.9
(22) Anmeldetag: 02.09.2009
(51) Int. Cl.: F24J 2/46, F24J 2/52, H01L 31/042

(54) **SOLARMODULRAHMEN MIT WASSERABLAUF**
SOLAR MODULE FRAME HAVING WATER DRAIN
BÂTI DE MODULE SOLAIRE À ÉVACUATION D'EAU

(30) Priorität: 03.09.2008 DE 102008045510
(43) Veröffentlichungstag der Anmeldung: 11.05.2011
(73) Patentinhaber: Sapa GmbH, 40472 Düsseldorf (DE)
(72) Erfinder: BRODAM, Michael, 53757 Sankt Augustin (DE)
(74) Vertreter: Lenzing Gerber Stute
(86) Internationale Anmeldenummer: PCT/EP2009/006354
(87) Internationale Veröffentlichungsnummer: WO 2010/025903

(56) Entgegenhaltungen:
- EP-A1- 0 200 050
- WO-A1-00/02256
- DE-A1- 3 611 542
- DE-A1- 10 321 422
- DE-A1-102006 061 284
- DE-B3-102006 053 830
- DE-U1-202007 016 429

## Beschreibung

Die vorliegende Erfindung betrifft einen Rahmen für ein Solarmodul, wobei der Rahmen mehrere Aluminium-Strangpressprofile aufweist, welche die Seiten des Rahmens bilden und die an ihren Ecken miteinander verbunden sind, wobei mindestens ein Aluminium-Strangpressprofil mindestens eine Hohlkammer aufweist.

Rahmen für Solarmodule werden oft aus Aluminium-strangpressprofilen hergestellt. Die Strangpressprofile werden dabei auf Länge und Gehrung gesägt und mittels einschiebbaren Eckverbindern miteinander verbunden. Eventuell eingedrungenes Regen- oder Schwitzwasser kann bei Frost den Rahmen beschädigen oder zerstören. Um dies zu verhindern, ist es notwendig, sicherzustellen, dass das Wasser aus dem Rahmen herausfließen kann. Hierzu werden Löcher in die Hohlkammern des Rahmens gebohrt oder gestanzt. Mittels Eckverbindern werden die auf Gehrung geschnittenen Profile miteinander verbunden.

Aus DE 3611542 A1 ist ein Solarmodul bekannt, bei dem Hohlprofile mittels Eckverbindungsteilen miteinander verbunden sind. Die Eckverbindungsteile sowie die Strangpresshohlprofile sind aus Aluminium gefertigt. Die Eckverbindungsteile verschließen die Hohlkammern der Strangpresshohlprofile stirnseitig.

Die DE 10 2006 061 284 A1 offenbart ein Solarmodul, dessen Rahmen ebenfalls aus Formprofilen hergestellt ist, die mit steckbaren Eckverbindungsteilen untereinander verbunden sind. Die Eckverbindungsteile sind so ausgebildet, dass das in den Hohlkammern befindliche Wasser über durch die Eckverbindungsteile gebildete Öffnungen abfließen kann. Die Eckverbindungsteile verbinden die Formprofile untereinander.

Aus DE 20 2007 016 429 U1 ist ein Rahmensystem für Solarkollektoren bekannt, bei dem der Rahmen durch Hohlkammerprofile gebildet ist, die mittels Verbinder, welche stirnseitig in die Hohlkammern der Hohlkammerprofile eingepresst sind, verbunden sind. Die Verbinder sind so gestaltet, dass sie mittels Dichtungen die Hohlkammerprofile nach außen abdichten.

Die DE 10 2006 053 830 B3 offenbart ebenfalls ein Rahmenbauteil für Solarzellen, bei dem der Rahmen aus Profilstäbe gebildet ist, welche durch Eckverbindungselemente miteinander verbunden sind. Die Eckverbindungselemente weisen vorspringende zapfen auf, die in die Hohlkammern der Profilstäbe eingepresst werden, wodurch die Hohlkammern stirnseitig durch die Zapfen verschlossen werden.

Nachteilig ist bei den vorbeschriebenen Rahmen der zusätzlich Aufwand zur Herstellung der Abflusslöcher sowie der Löcher für den elektrischen Potentialausgleich.

Aufgabe der vorliegenden Erfindung ist es, einen Rahmen, der aus Aluminium-Strangpressprofilen hergestellt ist, dahingehend weiterzubilden, dass in den Strangpressprofilen des Rahmens keine Abflussbohrungen eingearbeitet werden müssen.

Diese Aufgabe wird erfindungsgemäß mit einem Rahmen mit den Werkmalen des Anspruchs 1 gelöst.

Dadurch, dass die Aluminium-Strangpressprofile mit elektrisch leitenden Verbindern, welche in die offenen Stirnseiten der Aluminium-Strangpressprofile einschiebbar sind, elektrisch verbunden sind, wird ein elektrischer Potentialausgleich zwischen sämtlichen Rahmenteile sichergestellt.

Die Verbinder sind dabei vorteilhaft kraftschlüssig in den offenen Stirnseiten der Aluminium-Strangpressprofile einpressbar bzw. eingepresst. Hierdurch ergibt sich eine sichere und stabile Verbindung zwischen den Strangpressprofilen. Damit die Verbinder nicht aus den Stirnseiten der Strangpressprofile ungewollt herausgleiten können, weisen sie vorteilhaft Lamellen auf, die nach dem Einschieben in die Stirnseiten mit ihren Enden gegen die Innenwandung der Aluminium-Strangpressprofile drücken. Die Lamellen sind dabei nur mit einer Seite an dem Grundkörper der Verbinder angeformt und können leicht zu einer Seite hin beim Einschieben wegfedern. Der Verbinder ist zudem vorteilhaft als Strangpressprofil ausgebildet, welches auf Länge geschnitten wird. Der Grundkörper des Verbinders ist durch zwei im rechten Winkel zueinander und aneinander angeformte Platten gebildet, von dessen flachen Seiten jeweils nach außen und/oder innen die Lamellen in einem Winkel abstehen. Der Winkel kann zwischen 90° und 20° betragen. Vorteilhaft beträgt der Winkel einer Lamelle zu den Platten des Grundkörpers 45°. Die Breite der Platten entspricht dabei vorteilhaft der Höhe einer Hohlkammer des Aluminium-Strangpressprofils. Die Länge der Platten des Verbinders und damit die Eindringtiefe in die stirnseitigen Öffnungen der Aluminium-Strangpressprofile des Rahmens kann letztendlich beliebig gewählt werden. Eine hinreichende Stabilität sollte jedoch gewährleistet sein. Auch der Verbinder kann aus Aluminium gefertigt sein.

Das Eckelement kann vorteilhaft an einem Verbinder befestigbar sein. So ist es möglich, Verbinder und Eckelement so auszubilden, dass das Eckelement auf den Verbinder aufgeschoben oder mittels einer Rast- oder Schnappverbindung an diesem befestigt wird. Es können zusätzliche Befestigungsmittel, wie z.B. Schrauben, für das Befestigen des Eckelements am Verbindex vorgesehen werden. Diese erhöhen jedoch nicht nur die Herstellung, sondern vergrößern auch den Aufwand, den erfindungsgemäßen Rahmen zu montieren.

Ein Eckelement weist in einer bevorzugten Ausführungsform zwei, insbesondere zueinander senkrecht angeordnete, Seiten auf, die parallel zu den Stirnseiten der Aluminium-Strangpressprofile angeordnet und an diesen im zusammengebauten Zustand anliegen.

Vorteilhaft sind die Aluminium-Strangpressprofile nicht auf 45° Gehrung geschnitten, so dass nicht Außenwände der Aluminium-Strangpressprofile aneinandergrenzen und der Rahmen letztendlich scharfkantige Ecken aufweist. Die Erfindung sieht vielmehr vor, dass die Ecken des Rahmens durch die Eckelemente gebildet sind. Die Eckelemente können aus Aluminium oder Kunststoff gefertigt sein. Das Material Kunststoff bietet sich an, wenn die Ecken aus einem etwas weicheren Material sein müssen, damit die Eckelemente beim Aufsetzen des Rahmens mit einer Ecke nicht beschädigt werden oder letztendlich nur das leicht auszutauschende Eckelement beschädigt oder zerstört wird. Die Ecken der Eckelemente können vorzugsweise rund oder wenigsten abgerundet ausgebildet sein.

In einer besonders bevorzugten Ausführungsform sind die Eckelemente derart ausgebildet, dass sie gerade auf Länge zugeschnittene und im rechten Winkel zueinander angeordnete Aluminium-Strangpressprofile miteinander verbinden, so dass sich nur vernachlässigbare Spalten zwischen den aneinander anliegenden Wandungen ergeben.

Verteilhaft ist es, wenn die Eckelement, insbesondere mit ihren sichtbaren Außenwandungen, fluchtend an den Außenwandungen der angrenzenden Aluminium-Strsmgpressprofilen angrenzen, so dass sich wenn überhaupt nur vernachlässiqbare Spalte zwischen den Bauteilen ergeben. Es ist auch möglich, dass die Eckelemente die angrenzenden Außenwandungen der Aluminium-Strangpressprofile überlappen, so dass keine Spalte zwischen den Bauteilen sichtbar sind.

Das Eckelement weist vorteilhaft drei aneinander grenzende Außenwandungen auf, wobei von zwei der Außenwandungen Vorsprünge, insbesondere Wandungen, nach innen abstehend ausgehen, mit denen das Eckelement an dem Verbinder befestigbar, insbesondere auf mindestens zwei Lamellen des Verbinders, aufschiebbar ist.

Ein Aluminium-Strangpressprofil weist eine Hohlkammer auf, welche in zwei Bereiche mittels mindestens einer nach innen vorstehend stegförmigen Wandung aufgeteilt ist, wobei der eine erste, insbesondere größere Bereich zur stirnseitigen Aufnahme eines Verbinders, und der zweite Bereich der Hohlkammer als Wasserablaufkanal dient. Die beiden Bereiche sind dabei über die gesamte Länge des Strangpressprofils miteinander verbunden. Der Wasserablaufkanal ist gemäß einer Ausführungsform der Erfindung mit einem Bereich eines Eckelements in Verbindung, dessen mindestens einer Wandabschnitt die Abflussöffnung bildet, so dass eingedrungenes Wasser aus dem Rahmen abfließen kann. Die Abflussöffnung ist dabei vorteilhaft an der Unterseite, welche meist aufgrund der Anordnung des Rahmens auch die Unterseite ist, angeordnet.

Die Aluminium-Strangpressprofile können einen zur Rückseite offenen Kanal zum Umgreifen des Randes von Solarmodulen aufweisen. Hierdurch sind die Solarmodule von allen Seiten umgriffen und müssen nicht noch zusätzlich am Rahmen mittels Befestigungsmitteln befestigt werden. Auch die Eckelemente können einen entsprechenden Aufnahmeraum für die Ecke eines Solarmoduls aufweisen, der durch eine vorderseitenwandung zusammen mit einer dazu parallelen Wandung und den Seitenwandungen des Eckelements gebildet ist.

Nachfolgend werden anhand von Zeichnungen verschiedene mögliche Ausführungsformen näher erläutert.

Es zeigen:
- Fig. 1:: Perspektivische Ansicht eines Rahmens;
- Fig. 2:: geschnittene perspektivische Darstellung eines Aluminium-Strangpressprofils;
- Fig. 2a:: geschnittene perspektivische Darstellung eines Aluminium-Strangpressprofils mit geschlitztem Hohlraum;
- Fig. 3:: Verbinder;
- Fig. 4:: perspektivische Darstellung eines Eckelements;
- Fig. 4a:: Seitenansicht des Eckelements gem, Fig. 4;
- Fig. 4b u. 4c:: verschiedene Ansichten des Eckelements gem. Fig. 4;
- Fig. 5:: Draufsicht auf einen Eckausschnitt eines Rahmens;
- Fig. 6:: Draufsicht auf einen Eckausschnitt eines alternativen Rahmens;

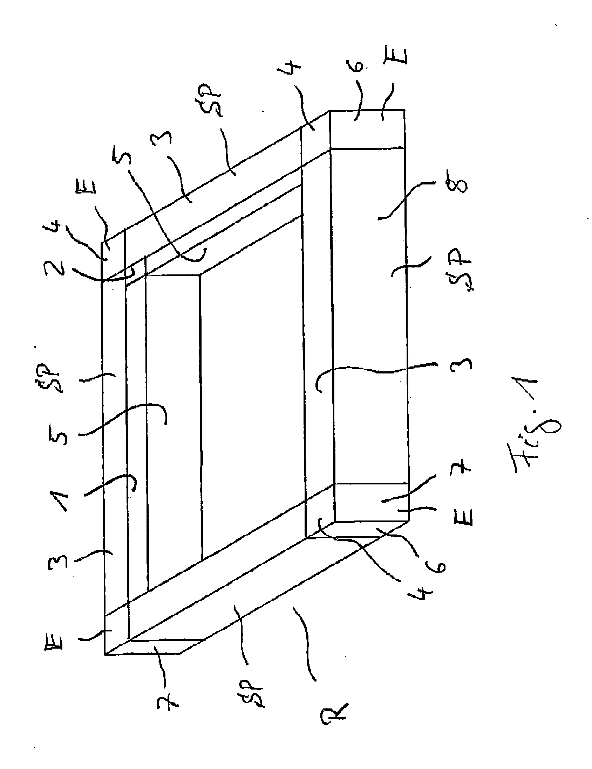

Die Figur 1 zeigt den erfindungsgemäßen Rahmen R, der durch die Aluminium-Strangpressprofile SP sowie die Eckelemente E gebildet ist. Die Eckelemente E zusammen mit den Strangpressprofilen SP bilden einen Aufnahmeraum 1, 2 für die in Figur 1 nicht dargestellten Solarmodule. Der Rahmen R weist eine Oberseite 3, 4 sowie Seitenwandungen 6, 7, 8 auf.

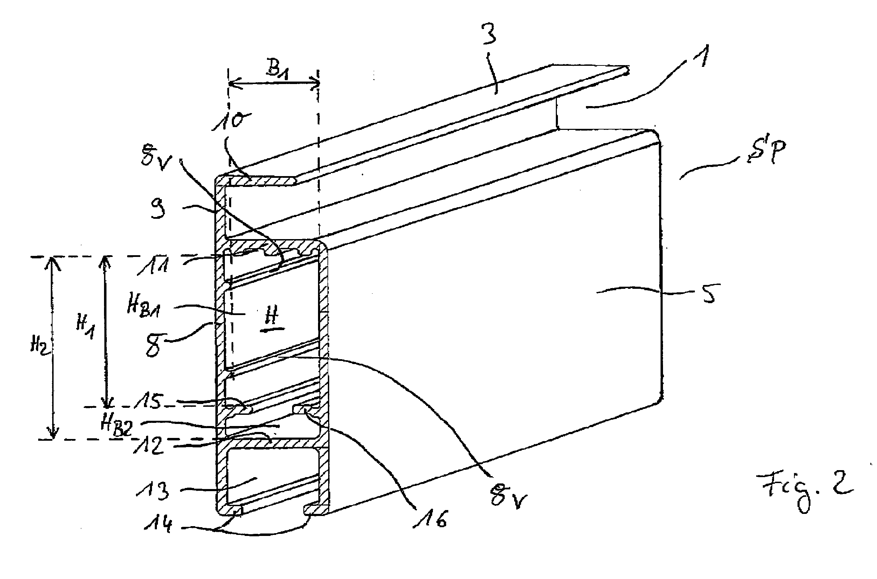

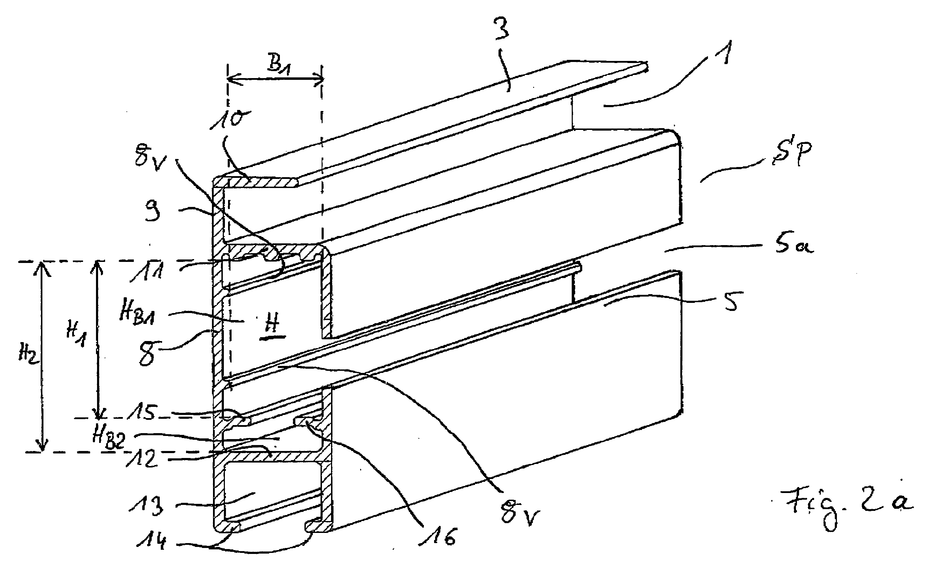

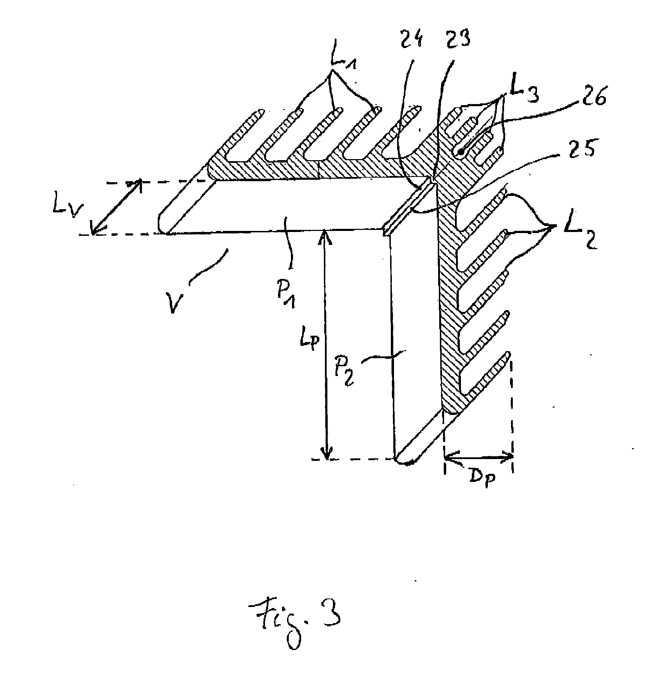

Die Figur 2 zeigt eine geschnittene perspektivische Ansicht eines Aluminium-Strangpressprofils SP. Das Profil SP weist eine Hohlkammer H auf, die mittels der Stege 15, 16 in die Bereiche H_{B1} und H_{B2} unterteilt ist. Die Hohlkammer H wird durch die Seitenwandungen 5, 8, 11 und 12 gebildet. Der Bereich H_{B1} dient zur Aufnahme eines in Figur 3 dargestellten Verbinders V und weist eine Höhe H₁ und eine Breite B₁ auf, die an die Breite L_{V} und Dicke D_{P} des Verbinders V (siehe Figur 3) angepasst ist. Der Bereich H_{B2} dient als Tasserablaufrinne bzw. -kanal. Das sich unterhalb der Wasserablaufrinne anschließende C-förmige Profil 13 mit den nach innen gerichteten kragenförmigen Wandungen 14 dient zur Befestigung des Rahmens R. Zur Oberseite 3 hin weist das Profil SP eine zur Innenseite 5 hin geöffnete Nut 1 auf, die durch die Wandungen 19 und 11 gebildet ist, wobei in der Nut 1 ein nicht dargestelltes Solarmodul mit seiner einen Kante einliegt.

Die Figur 2a zeigt eine weitere mögliche Ausführungsform des Aluminium-Strangpressprofils SP. Dieses Hohlprofil SP unterscheidet sich von dem in Figur 2 dargestellten lediglich dadurch, dass die Wandung 5 der Hohlkammer H einen Schlitz 5a aufweist. Im Sinne der Erfindung wird somit als Hohlkammer auch eine Kammer H angesehen, welche nicht nur stirnseitige Öffnungen aufweist.

Der Verbinder V weist einen Grundkörper auf, der durch die rechtwinklig zueinander stehenden und aneinander angeformten Platten P₁ und P₂ gebildet ist, von denen sich aus Lamellen L₁, L₂ und L₃ in einem Winkel von ca, 45° erstrecken. Der Winkel kann entsprechend den Anforderungen gewählt werden. Die Lamellen L₁ und L₂ dienen dabei zur Erzeugung eines Anpressdruckes gegen die Innenwandungen der Wandung 8 bzw. deren daran nach innen vorspringenden Vorsprünge 8v. Durch Hineindrücken eines Schenkels des Verbinders V in den Hohlraum H_{B1} werden die Lamellen L₁ bzw. L₂ leicht gebogen und erzeugen hierdurch eine erforderliche Andruckkraft, so dass ein Herausziehen des Verbinders aus dem strangpressprofil SP nur mit einer sehr großen Kraft und eventuell unter Zerstörung vom Strangpressprofil SP und/oder Verbinder V möglich ist. Der Verbinder V ist ebenfalls ein auf Länge L_{V} geschnittenes Strangpressprofil und dient zur elektrischen Verbindung der miteinander über den Verbinder V verbundenen Strangpressprofile SP.

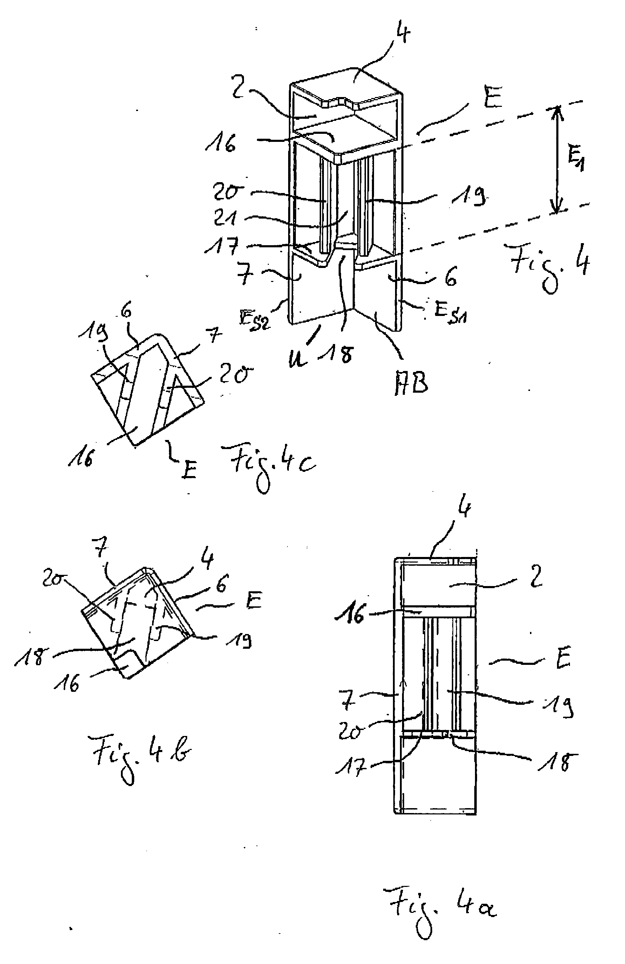

Der Verbinder V weist zusätzliche Lamellen L₃ auf, die zur Verbindung mit dem in den Figuren 4 bis 4c dargestellten Eckelement E dienen. An der Inneren Ecke weist der Verbinder einen Vorsprung 23 auf, der seitliche Anschlagsflächen 24 und 25 bildet. Beim Einschieben des Verbinders in die Hohlkamer H eines Strangpressprofils SP schlägt das Strangpressprofil SP mit seiner stirnseitigen Wandung gegen die Anschlagsfläche 24 bzw.- 25. Durch die Anlageflächen 24, 25 ist somit gewährleistet, dass die aneinandergrenzenden Strangpressprofile SP exakt mit Ihren Eckkanten aneinander zur Anlage kommen.

Der Verbinder V weist zudem vorteilhaft eine insbesondere kreisförmig Ausnehmung 26 auf, in die eine Potentialausgleichsschraube einschraubbar ist. Diese Ausnehmung kann beim Strangpressen vorteilhaft mit ausgebildet werden, so dass kein zusätzlicher Aufwand mehr notwendig ist, eine Erdungsbohrung am Strangpressprofil SP oder dem Verbinder V nachträglich vorzunehmen.

Ein Eckelement E weist gemäß Figur 4 drei äußere Wandungen 4, 6, 7 auf, wobei die Wandungen 6 und 7 die Seitenwandungen und die Wandung 4 eine Art Deckel bildet. Die drei Wandungen 4, 6 und 7 stehen jeweils senkrecht aufeinander und bilden die äußere Hülle des Eckelementes E. Zur Versteifung weist das Eckelement E zwei innenliegende Wandungen 16, 17 auf, die parallel zur Deckelwandung 4 und in einem Abstand E₁ voneinander angeordnet sind. Die Deckenwandung 4 sowie die Wandung 16 bilden den Aufnahmeraum für eine Ecke eines nicht dargestellten Solarmoduls. In der unteren Wandung 17 ist eine Abflussöffnung 18 in Form einer Aussparung ausgebildet. Die Wandung 17 schließt bündig mit den Vorsprüngen bzw. Wandungen 15 des in Figur 2 dargestellten Strangpressprofils SP ab, Durch die Öffnung 18 und durch die Tatsache, dass das Eckelement zur Unterseite hin offen ist, ist es somit möglich, dass Wasser, welches sich im Hohlraum H, insbesondere in der Abflussrinne H_{B2}, befindet, durch die Abflussöffnung 18 aus dem Rahmen heraustreten bzw. abfließen kann. Zwischen den Wandungen 16 und 17 sind in einem 45° Winkel zu den Seitenwandungen 6 und 7 angeordnete Wandungen 19 und 20 ausgebildet. Diese Wandungen 19, 20 sind von ihrer Wandstärke her etwas dicker als der Abstand der Lamellen L₃ zueinander, so dass beim Aufschieben des Eckelementes E dieses mit seinen Wandungen 19, 20 zwischen die Lamellen L₃ schiebt, wodurch das Eckelement sicher von den Lamellen L₃ in Position gehalten wird. Durch die Wandungen 16, 17, welche oben und unten an den Lamellen Lᵢ anliegen, wird das Eckelement, auch in vertikaler Richtung, d.h. parallel zur Flächennormalen des Rahmens sicher in Position gehalten.

Die Figur 4a zeigt eine Seitenansicht des Eckelementes E. Die Figur 4b zeigt eine Draufsicht auf das Eckelement E, wobei die Wandungen 19 und 20 sowie die Platte 16 dargestellt sind. Die Figur 4c zeigt eine geschnittene Ansicht des Eckelementes E im Bereich der Wandungen 19, 20.

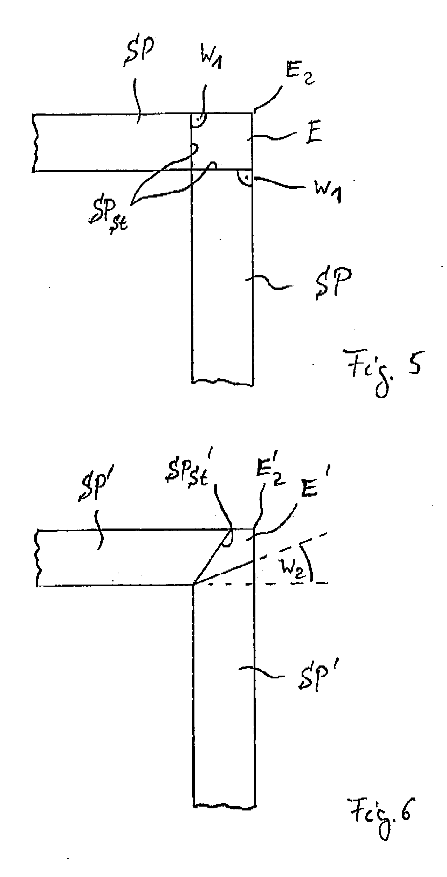

Die Figur 5 zeigt eine Draufsicht auf eine Ecke E des erfindungsgemäßen Rahmens R, wie er in den vorbeschriebenen Figuren im Einzelnen dargestellt ist. Die Stirnseiten SP_{St} der Strangpressprofile SP sind rechtwinklig (Winkel W₁) abgelängt und stoßen möglichst spaltfrei an das Eckelement E. Die äußerste Eckkante E₂ wird somit vom Eckelement E gebildet.

Die Figur 6 zeigt eine alternative Ausgestaltung des Rahmens, wobei die Strangpressprofile SP' nicht rechtwinklig, sondern in einem Winkel W₂ abgelenkt sind. Das Eckelement E' ist entsprechend ausgeformt, so dass es den Bereich zwischen den Stirnseiten SP_{St}' der beiden aneinander grenzenden Strangpressprofile SP¹ ausfüllt und ebenfalls eine Ecke E₂' des Rahmens bildet. Auch in dieser Ausführungsform kann ein Verbinder gemäß Figur 3 ohne Abänderungen verwendet werden. Diese Ausführungsform soll lediglich zeigen, dass das Eckelement E' nicht als rechteckiges Element ausgebildet werden muss. Das Eckelement E gem. der Figuren 1 bis 5 zeigt jedoch die bevorzugte Ausgestaltung eines Eckelements E, da bei dieser Form die Strangpressprofile SP einfach und nur unter Einhaltung des rechten Winkels auf Länge geschnitten werden können.

## Patentansprüche

1. Rahmen (R) für ein Solarmodul, wobei der Rahmen (R) mehrere Aluminium-Strangpressprofile (SP) aufweist, welche die Seiten des Rahmens (R) bilden und die an ihren Ecken miteinander verbunden sind, wobei mindestens ein Aluminium-Strangpressprofil (SP) mindestens eine Hohlkammer (H) aufweist, wobei der Rahmen (R) Eckenelemente (E, E') aufweist, wobei mindestens ein Eckelement (E, E') eine Abflussöffnung (18, AB) aufweist, und die Abflussöffnung (18, AB) mit einer Hohlkammer (H) mindestens eines angrenzenden Aluminium-Strangpressprofils (SP) in Verbindung ist, wobei die Aluminium-Strangpressprofile (SP) mittels elektrisch leitenden Verbinder (V) elektrisch verbunden sind, **dadurch gekennzeichnet, dass** ein Aluminium-Strangpressprofil (SP) eine Hohlkammer (H) aufweist, die in zwei Bereiche (H_{B1}" H_{B2}) mittels mindestens einer nach innen vorstehender stegförmiger Wandung (15) unterteilt ist, wobei der eine erste, insbesondere größere, Bereich (H_{B1}) zur stirnseitigen Aufnahme eines Verbinders (V), und der zweite Bereich (H_{B2}) der Hohlkammer (H) als Wasserablaufkanal dient, und die beiden Bereiche (H_{B1}, H_{B2}) über die gesamte Länge des Strangpressprofils (SP) miteinander verbunden sind.

2. Rahmen (R) nach Anspruch 1, **dadurch gekennzaichnet,** dass die Verbinder (V) kraftschlüssig in den offenen Stirnseiten der Aluminium-Strangpressprofile (SP) einpressbar sind.

3. Rahmen (R) nach einem der vorhergehenden Ansprüche, **d a - durch gekenntzeichnet,** dass die Verbinder (V) Lamellen (L₁, L₂, L₃) aufweisen, die nach dem Einschieben in die Stirnseiten mit ihren Enden gegen die Innenwandung (8v) der Aluminium-Strangpressprofile (SP) drücken.

4. Rahmen (R) nach einem der vorhergehenden Ansprüche, **d - durch gekennzeichnet,** dass die Verbinder (V) auf Länge (L_{V}) geschnittene Strangpressprofile, insbesondere aus Aluminium, sind.

5. Rahmen (R) nach einem der vorhergehenden Ansprüche, **dadurch gekennzeichnet, dass** ein Eckelement (E, E') an einem Verbinder (V) befestigbar, insbesondere aufschiebbar oder mittels einer Rast- oder Schnappverbindung, ist.

6. Rahmen (R) nach einem der vorhergehenden Ansprüche, **dadurch gekennzeichnet, dass** ein Eckelement (E, E') zwei, insbesondere zueinander senkrecht angeordnete, Seiten (E_{S1}, E_{S2}) aufweist, die parallel zu den Stirnseiten (SP_{ST}) der Aluminium-Strangpressprofile (SP) angeordnet und an diesen im zusammengebauten Zustand anliegen.

7. Rahmen (R) nach einem der vorhergehenden Ansprüche, **dadurch gekenntzeichnet**, dass das Eckelement (E, E'), insbesondere mit seinen sichtbaren Außenwandungen (4, 6, 7), fluchtend an den Außenwandungen (5, 8, 9, 10) der angrenzenden Aluminium-Strangpressprofile (SP) angrenzt.

8. Rahmen (R) nach einem der vorhergehenden Ansprüche, **dadurch gekennzeichnet, dass** das Eckelement (E, E') drei aneinander grenzende Außenwandungen (4, 6, 7) aufweist, und dass von mindestens zwei der Außenwandungen (6, 7) Vorsprünge, insbesondere Wandungen (19, 20), nach innen abstehend ausgehen, mit denen das Eckelement (E, E') an dem Verbinder (V) befestigbar, insbesondere auf mindestens zwei Lamellen (L₃) des Verbinders (V), aufschiebbar ist.

9. Rahmen (R) nach einem der vorhergehenden Ansprüche, **da** - **durch gekenntzeichnet**, dass der Wasserablaufkanal mit einem Bereich (AB) eines Eckelements (E, E') in Verbindung ist, dessen mindestens einer Wandabschnitt die Abflussöffnung bildet.

10. Rahmen (R) nach einem der vorhergehenden Ansprüche, **dadurch gekenntzeichnet**, dass die Aluminium-Strangptessprofile (SP) einen zur Rahmeninnenseite offenen Kanal (1) zum Umgreifen des Randes von Solarmodulen aufweisen.

11. Rahmen (R) nach einem der vorhergehenden Ansprüche, **dadurch gekenntzeichnet**, dass das Eckelement (E, E') eine Vorderseitenwandung (4) aufweist, die zusammen mit einer dazu parallelen Wandung (16) und den Seitenwandungen (6, 7) einen Aufnahmeraum (2) für die Ecke eines Solarmoduls bildet.

12. Rahmen (R) nach einem der vorhergehenden Ansprüche, **dadurch gekennzeichnet, dass** das Eckelement (E, E') aus Aluminium oder Kunststoff gefertigt ist.

13. Rahmen (R) nach einem der vorhergehenden Ansprüche, **dadurch gekennzeichnet, dass** der Verbinder (V) eine Ausnehmung (26) zum Einschrauben einer Potentialausgleichsschraube aufweist, welche insbesondere während des Strangpressvorganges bereits mit ausgebildet wird.

14. Rahmen (R) nach Anspruch 13, **dadurch gekennzeichnet, dass** sich die Ausnehmung (26) in Längserstreckung des auf Länge geschnittenen und als Strangpressprofil ausgebildeten Verbinders (V) erstreckt, derart, dass die Schraubenachse der Potentialausgleichsschraube parallel zur Flächennormalen des Rahmens (R) verläuft.

## Claims

1. Frame (R) for a solar module, the frame (R) comprising a plurality of aluminium extrusion profiles (SP) which form the sides of the frame (R) and are connected to one another at the corners, at least one aluminium extrusion profile (SP) comprising at least one hollow chamber (H), the frame (R) comprising corner elements (E, E'), at least one corner element (E, E') comprising a drainage opening (18, AB) and the drainage opening (18, AB) being connected to a hollow chamber (H) of at least one adjacent aluminium extrusion profile (SP), the aluminium extrusion profile (SP) being electrically connected by means of electrically conductive connectors (V), **characterised in that** a press-drawn aluminium section (SP) comprises a hollow chamber (H) which is subdivided into two regions (H_{B1}, H_{B2}) by means of at least one inwardly protruding web-shaped wall (15), a first, in particular larger region (H_{B1}) being used for receiving a connector (V) on the end side and the second region (H_{B2}) of the hollow chamber (H) being used as a water drainage channel, and the two regions (H_{B1}, H_{B2}) being connected to one another over the entire length of the extrusion profile (SP).

2. Frame (R) according to Claim 1, **characterised in that** the connectors (V) are pressed into the open end sides of the aluminium extrusion profile (SP) with a force fit.

3. Frame (R) according to one of the preceding claims, **characterised in that** the connectors (V) comprise plates (L₁, L₂, L₃) which, after insertion into the open end sides, press with their ends against the inner wall (8v) of the aluminium extrusion profile (SP).

4. Frame (R) according to one of the preceding claims, **characterised in that** the connectors (V) are extrusion profiles cut to length (L_{V}), in particular consisting of aluminium.

5. Frame (R) according to one of the preceding claims, **characterised in that** a corner element (E, E') can be fastened on a connector (V), in particular slid on or by means of a latch or snap connection.

6. Frame (R) according to one of the preceding claims, **characterised in that** a corner element (E, E') comprises two sides (E_{S1}, E_{S2}), in particular arranged perpendicularly to one another, which are arranged parallel to the end sides (SP_{ST}) of the aluminium extrusion profile (SP) and bear thereon in the assembled state.

7. Frame (R) according to one of the preceding claims, **characterised in that** the corner element (E, E') lies, in particular with its visible outer walls (4, 6, 7), flush on the outer walls (5, 8, 9, 10) of the adjacent aluminium extrusion profiles (SP).

8. Frame (R) according to one of the preceding claims, **characterised in that** the corner element (E, E') comprises three outer walls (4, 6, 7) adjoining one another and **in that** projections, in particular walls (19, 20), by which the corner element (E, E') can be fastened on the connector (V), in particular slid onto at least two plates (L₃) of the connector (V), protrude inwards from at least two of the outer walls (6, 7).

9. Frame (R) according to one of the preceding claims, **characterised in that** the water drainage channel is in communication with a region (AB) of a corner element (E, E'), at least one wall section of which forms the drainage opening.

10. Frame (R) according to one of the preceding claims, **characterised in that** the aluminium extrusion profiles (SP) comprise a channel (1) which is open towards the inside of the frame in order to engage with the edge of solar modules.

11. Frame (R) according to one of the preceding claims, **characterised in that** the corner element (E, E') comprises a front side wall (4) which, together with a wall (16) parallel thereto and the side walls (6, 7), forms a reception space (2) for the corner of a solar module.

12. Frame (R) according to one of the preceding claims, **characterised in that** the corner element (E, E') is made of aluminium or plastic.

13. Frame (R) according to one of the preceding claims, **characterised in that** the connector (V) comprises a recess (26), for screwing in a potential compensation screw, which is in particular already formed during the extrusion process.

14. Frame (R) according to Claim 13, **characterised in that** the recess (26) extends in the longitudinal extent of the connector (V) cut to length and formed as a extrusion profile, in such a way that the screw axis of the potential compensation screw extends parallel to the surface normal of the frame (R).

## Revendications

1. Cadre (R) pour un panneau ou module solaire, le cadre (R) comprenant plusieurs profilés extrudés (SP) en aluminium, qui forment les côtés du cadre (R) et qui sont assemblés les uns aux autres au niveau des coins, au moins un profilé extrudé (SP) en aluminium présentant au moins un compartiment creux (H), le cadre (R) présentant des éléments de coin (E, E'), au moins un élément de coin (E, E') présentant une ouverture d'écoulement (18, AB), et l'ouverture d'écoulement (18, AB) étant en communication avec un compartiment creux (H) d'au moins un profilé extrudé (SP) en aluminium, et les profilés extrudés (SP) en aluminium étant reliés électriquement au moyen de connecteurs (V) électriquement conducteurs, **caractérisé en ce qu'**un profilé extrudé (SP) en aluminium présente un compartiment creux (H), qui est subdivisé en deux zones (H_{B1}, H_{B2}) au moyen d'au moins une paroi (15) en forme de nervure faisant saillie vers l'intérieur, la première, notamment la plus grande zone (H_{B1}) servant à recevoir frontalement un connecteur (V), et la deuxième zone (H_{B2}) du compartiment creux (H) servant de canal d'évacuation d'eau, et les deux zones (H_{B1}, H_{B2}) étant en communication l'une avec l'autre sur la totalité de la longueur du profilé extrudé (SP).

2. Cadre (R) selon la revendication 1, **caractérisé en ce que** les connecteurs (V) peuvent être pressés dans les côtés frontaux ouverts des profilés extrudés (SP) en aluminium, en y formant une liaison par adhérence.

3. Cadre (R) selon l'une des revendications précédentes, **caractérisé en ce que** les connecteurs (V) présentent des lamelles (L₁, L₂, L₃), qui après l'insertion dans les côtés frontaux, appuient, avec leurs extrémités, contre la paroi intérieure (8v) des profilés extrudés (SP) en aluminium.

4. Cadre (R) selon l'une des revendications précédentes, **caractérisé en ce que** les connecteurs (V) sont des profilés extrudés, notamment en aluminium, coupés à longueur (L_{V}).

5. Cadre (R) selon l'une des revendications précédentes, **caractérisé en ce qu'**un élément de coin (E, E') peut être fixé à un connecteur (V), notamment en y étant engagé par-dessus ou au moyen d'une liaison par encliquetage ou à déclic.

6. Cadre (R) selon l'une des revendications précédentes, **caractérisé en ce qu'**un élément de coin (E, E') présente deux côtés (E_{S1}, E_{S2}), notamment agencés de manière mutuellement perpendiculaires, qui sont disposés parallèlement aux côtés frontaux (SP_{ST}) des profilés extrudés (SP) en aluminium, et s'appuyant contre ceux-ci dans l'état assemblé.

7. Cadre (R) selon l'une des revendications précédentes, **caractérisé en ce que** l'élément de coin (E, E') vient, notamment avec ses parois extérieures visibles (4, 6, 7), avoisiner de manière affleurante les parois extérieures (5, 8, 9, 10) des profilés extrudés (SP) en aluminium, contigus.

8. Cadre (R) selon l'une des revendications précédentes, **caractérisé en ce que** l'élément de coin (E, E') présente trois parois extérieures (4, 6, 7) mutuellement contigües, et **en ce qu'**à partir d'au moins deux des parois extérieures (6, 7) sont issues des protubérances, notamment des parois (19, 20), en saillie vers l'intérieur, avec lesquelles l'élément de coin (E, E') peut être fixé au connecteur (V), notamment être engagé sur au moins deux lamelles (L₃) du connecteur (V).

9. Cadre (R) selon l'une des revendications précédentes, **caractérisé en ce que** le canal d'évacuation d'eau est en communication avec une zone (AB) d'un élément de coin (E, E'), dont au moins un tronçon de paroi forme l'ouverture d'écoulement.

10. Cadre (R) selon l'une des revendications précédentes, **caractérisé en ce que** les profilés extrudés (SP) en aluminium présentent un canal (1) ouvert vers le côté intérieur du cadre, pour enserrer le bord de panneaux solaires.

11. Cadre (R) selon l'une des revendications précédentes, **caractérisé en ce que** l'élément de coin (E, E') présente une paroi de côté avant (4), qui forme, en commun avec une paroi (16) qui lui est parallèle et les parois latérales (6, 7), une cavité de logement (2) pour recevoir le coin d'un panneau solaire.

12. Cadre (R) selon l'une des revendications précédentes, **caractérisé en ce que** l'élément de coin (E, E') est fabriqué en aluminium ou en matière plastique.

13. Cadre (R) selon l'une des revendications précédentes, **caractérisé en ce que** le connecteur (V) présente un évidement (26) pour y visser une vis de liaison équipotentielle, et qui est formé lors de l'opération d'extrusion.

14. Cadre (R) selon la revendication 13,
**caractérisé en ce que** l'évidement (26) s'étend dans le sens de l'étendue longitudinale du connecteur (V) coupé à longueur et réalisé sous forme de profilé extrudé, de manière telle que l'axe de vis de la vis de liaison équipotentielle s'étende parallèlement à la normale de la surface du cadre (R).
